# EUROPEAN PATENT SPECIFICATION

(11) **EP 1 646 987 B1**
(45) Date of publication and mention of the grant of the patent: **09.05.2012**
(21) Application number: 04743355.2
(22) Date of filing: 09.07.2004
(51) Int. Cl.: G07C 9/00, B60R 25/00, B60R 25/10

(54) **SECURITY SYSTEM**
SICHERHEITSSYSTEM
SYSTEME DE SECURITE

(30) Priority: 09.07.2003 GB 0315992
(43) Date of publication of application: 19.04.2006
(73) Proprietor: Nissan Motor Manufacturing (UK) Ltd., Cranfield Bedfordshire MK43 0DB (GB)
(72) Inventor: KIRBY, Gary, Nissan Technical Centre Europe Ltd, Bedfordshire MK43 0DB (GB); BREEN, Simon, Nissan Technical Centre Europe Ltd, Bedfordshire MK43 0DB (GB)
(74) Representative: Holmes, Matthew William
(86) International application number: PCT/GB2004/003014
(87) International publication number: WO 2005/006262

(56) References cited:
- EP-A- 0 908 589
- EP-A- 1 006 249
- EP-A- 1 216 901
- GB-A- 2 285 704
- US-A- 5 790 043
- US-B1- 6 236 333

## Description

The present invention relates to a security system and particularly, but not exclusively, to a security system for a vehicle such as an automobile. More specifically, the invention concerns an improvement to so-called "passive entry" or "keyless entry" vehicle locking systems.

For many years, vehicles such as automobiles employed conventional "lock and key" systems for locking and unlocking the vehicle doors and turning on the ignition. Each door of the vehicle, as well as the ignition switch, was provided with a barrel lock into which a unique key could be inserted and turned thereby to lock/unlock the doors or to switch on the ignition, respectively.

Improvements in electronics systems led to the introduction of remote locking systems involving a transmitter unit in a key fob held by the vehicle user and a receiver unit located within the vehicle. In such systems, the transmitter unit is arranged to transmit a LOCK/UNLOCK signal to the receiver unit in response to the user actuating a button on the key fob. On receipt of the LOCK/UNLOCK signal by the receiver unit, a control unit in the vehicle causes the vehicle doors to unlock or lock, depending on the current locked/unlocked state of the vehicle. The key can be used to lock/unlock the vehicle doors in the conventional manner and is, in general, required to switch on the ignition.

More recently still, systems have been introduced which remove entirely the requirement for a key to lock or unlock the vehicle doors, or even to switch on the ignition. Instead, the user carries a small user transceiver unit known as a token which communicates with a further transceiver unit located within the vehicle. The vehicle transceiver unit (VTU) detects the proximity of the token and, if the latter is within a certain distance or threshold range of the vehicle, unlocks the vehicle doors. Furthermore, sensors within the vehicle itself detect the presence or absence of the token within the vehicle cabin and only permit the switching on of the vehicle ignition if the token is detected as being within the cabin.

It is such systems, known as "passive entry", "keyless entry" or "smart keyless entry" systems, to which the present invention particularly relates.

While passive entry systems are generally considered to provide a number of advantages to the user, particularly in that the user is not required to manually operate the token, or even to be holding the token in hand, in order to unlock the vehicle doors, the applicant company has identified a significant disadvantage of the system relating to vehicle security.

Specifically, the transceiver unit in the vehicle uses only the detected distance of the token from the vehicle and not the exact disposition or location of the token, such as whether it is in the user's pocket or bag or, indeed, in the possession of the user at all. Furthermore, there is no positive action required on the part of the user in respect of the token. The only action required by the user in order to unlock the vehicle doors is to press a button on the vehicle door itself. This activates the vehicle transceiver unit which determines whether the distance between the token and the vehicle is less than a predetermined threshold distance, the vehicle transceiver unit sends a signal to the control unit for the vehicle's central locking system which then unlocks the vehicle doors.

It has been identified by the applicant that if a token is left by the user within the predetermined threshold distance of the vehicle, then this may pose a significant security risk since a potential thief need only activate the system, such as by pressing the button on the vehicle door, in order to unlock the vehicle. It is not necessary for the thief to have access to the token itself. Such a situation can easily arise where, for example, the vehicle is parked close to the user's house, the token having been left in a location within the house which is within the threshold distance.

Having been given access to the vehicle, the thief may then be able to switch on the ignition and possibly start the vehicle by "hot wiring" or other methods. Even if the thief is unable to start the vehicle, once inside the vehicle could be vandalised or possessions stolen.

This is not the only problem inherent to passive entry systems which has been identified by the applicant company. It may be possible for a thief to gain access to the vehicle wiring loom and effectively extend the predetermined threshold distance of the vehicle transceiver unit either by connecting, for example, a long piece of wire to the antenna of the vehicle transceiver unit to increase the effective length of the antenna or by electronically boosting the electromagnetic signal generated by the unit. In this case, even if the token is located a considerable distance from the vehicle, it may fall within the extended range of the vehicle transceiver unit created by the thief.

EP 1006249 discloses a passive entry system for a vehicle according to the preamble of claims 1 and 2.

It is an aim of the present invention to address these disadvantages of known passive entry or keyless entry vehicle security systems.

According to one aspect of the present invention, there is provided a passive entry system according to claim 1. According to another aspect of the present invention, there is provided a passive entry system according to claim 2.

The present invention will now be described, by way of example only, with reference to the accompanying drawings in which:
Figure 1 illustrates schematically a known form of passive entry system for a vehicle;
Figure 2 illustrates schematically a token for use with the system of Figure 1;
Figure 3 illustrates schematically a first form of passive entry system according to the invention;
Figure 4 illustrates schematically a token for use with the system of Figure 3; and
Figure 5 illustrates schematically an alternative form of passive entry system according to the invention.

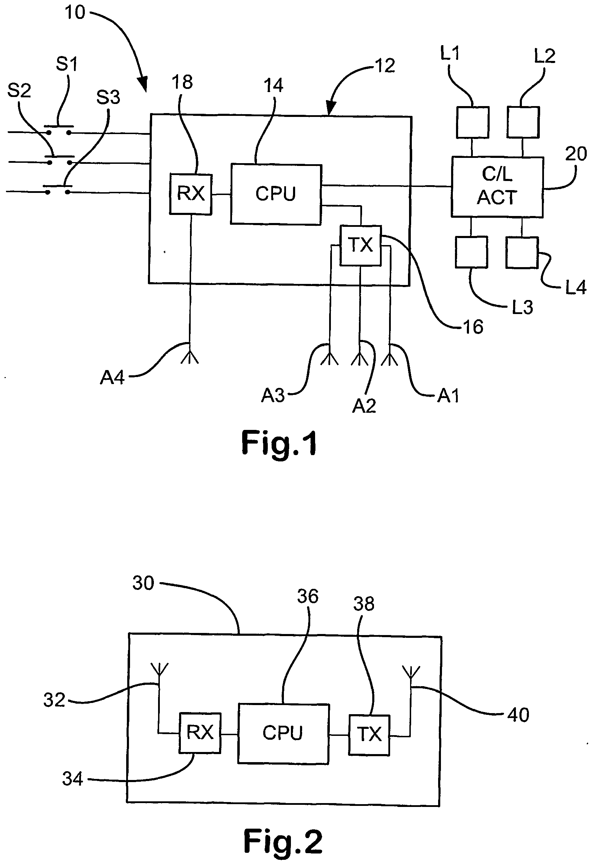

Referring to Figure 1, a known form of passive entry system for a vehicle is shown generally at 10. The passive entry system 10 includes a vehicle transceiver unit (VTU) 12 comprising a central processing unit (CPU) 14, connected to a transmitter 16 and to a receiver 18.

The transmitter 16 is connected to a plurality of antennas A1 - A3 which serve to transmit electromagnetic signals generated by the transmitter 16. Similarly, the receiver 18 is connected to an antenna A4 which serves to receive electromagnetic signals received by the receiver 18, as described below.

Also connected to the VTU 12 are a plurality of switches. In the illustrated embodiment, there are three switches S1 - S3 connected to the CPU 14 within the VTU 12, each switch being located on a respective door of the vehicle. Switch S1, for example, is located on the driver's door of the vehicle whilst switch S2 is located on the passenger or "assist" door and switch S3 on the back door of the vehicle.

The CPU 14 in the VTU 12 is also connected to a lock actuator control unit 20 which communicates with a plurality of lock actuators L1 - L4 for locking and unlocking selected doors of the vehicle.

Referring next to Figure 2, this illustrates a known form of user transceiver unit 30 referred to hereafter as a "token". The token 30 takes the form of a relatively small, plastic housing within which is contained a first antenna arrangement 32, a receiver unit 34, an central processing unit (CPU) 36, a transmitter unit 38 and a transmitting antenna system 40. The electronic composition of such units will be well understood by the skilled person with reference to the function thereof as indicated below and are not, therefore, described in detail herein.

Operation of the system of Figure 1 and the token of Figure 2 will now be described.

Initially, the system remains dormant. No signals are transmitted either by the VTU 12 or by the token 30. The vehicle doors (not shown) are locked. To unlock the vehicle, the user approaches the vehicle carrying the token 30 either in hand or in a pocket or bag. There is no requirement for the user to have manual access to the token since the system is passive and manual operation of the token is not necessary.

To open, for example, the driver's door, the user approaches the door and presses the switch S1 located on the door itself. Pressing of the switch S1 causes an electrical current to flow therethrough, which is detected by the CPU 14. The CPU 14 then generates a command signal in the form of a 48-bit digital signal which includes a unique 8-bit identifier portion. The command signal is applied to the transmitter unit 16 for transmission.

The transmitter unit 16 is arranged to modulate the command signal with a low frequency (LF) carrier signal at approximately 125kHz, amplify it and then transmit it via one or more of the antennas A1 - A3. Usually, the command signal is transmitted via the antenna corresponding to the switch pressed by the user. The antennas A1 - A3 are arranged such that the range of the transmitted command signal, hereafter termed the threshold range, does not exceed approximately 2m from the vehicle. The reason for this range restriction is that it is desired to prevent a situation whereby a thief can unlock the vehicle doors by pressing the relevant switch S1 - S3 on the vehicle whilst the owner, who is in possession of the token, is too far away to take preventative action.

After transmission of the command signal, the CPU 14 applies a predetermined algorithm to the identifier portion of the command signal to produce a unique reference value for reasons which are described below.

If the token 30 is within the threshold range of the transmitted command signal, the signal is received by the receiver unit 34 in the token 30 via the first antenna arrangement 32. The receiver unit 34 applies the command signal to the CPU 36 which applies the predetermined algorithm to the identifier portion of the command signal to produce a unique token value. The token value is then modulated by the transmitter unit 38 with a carrier signal having a frequency of approximately 432MHz, amplified and is then transmitted back to the vehicle.

The transmitted signal representing the token value is received by the receiver unit 18 within the VTU 12. The receiver unit 18 demodulates the signal to extract the token value and applies the token value to the CPU 14. The CPU 14 then compares the token value with the reference value generated previously. If the token value matches the reference value, then the CPU 14 sends an UNLOCK signal to the lock actuator controller 20 to control the relevant lock or locks L1 - L4 thereby to unlock the relevant vehicle door. In some systems, pressing the switch twice in quick succession unlocks two or more of the vehicle doors.

The system is such that the signal sent by the CPU to the lock actuator controller toggles between LOCK and UNLOCK, depending on the initial condition of the door, i.e. whether the door was locked or unlocked when the signal is sent.

The above description is given by way of example only. Existing passive entry systems may differ slightly in terms of construction or function from the system described above. However, all will be well understood by the skilled person and it will be appreciated that the present invention is applicable to substantially all passive entry systems and not solely to a system which operates as described above.

As described above, a disadvantage of passive entry systems is that, provided the token 30 is within the threshold range of the command signal from the VTU 12, almost irrespective of its actual location, it may be possible for an unauthorised person, such as a thief, to gain access to the vehicle simply by operating one of the switches on the vehicle doors. Once access to the vehicle is gained, the vehicle could be "hot wired" to start the engine, the interior could be vandalised or belongings in the vehicle could be stolen.

Such a situation might arise, for example, if the vehicle is parked in close proximity to the owner's house. In this case, the distance between the vehicle and the token within the house might be less than the threshold range of the command signal, in which case a potential thief merely has to operate one of the door switches S1 - S3. As described above, the VTU 12 will transmit the command signal to the token 30 which will respond with the correct code or token value, regardless of the fact that the token itself 30 is not in the possession of the thief, thereby permitting the vehicle door to be opened.

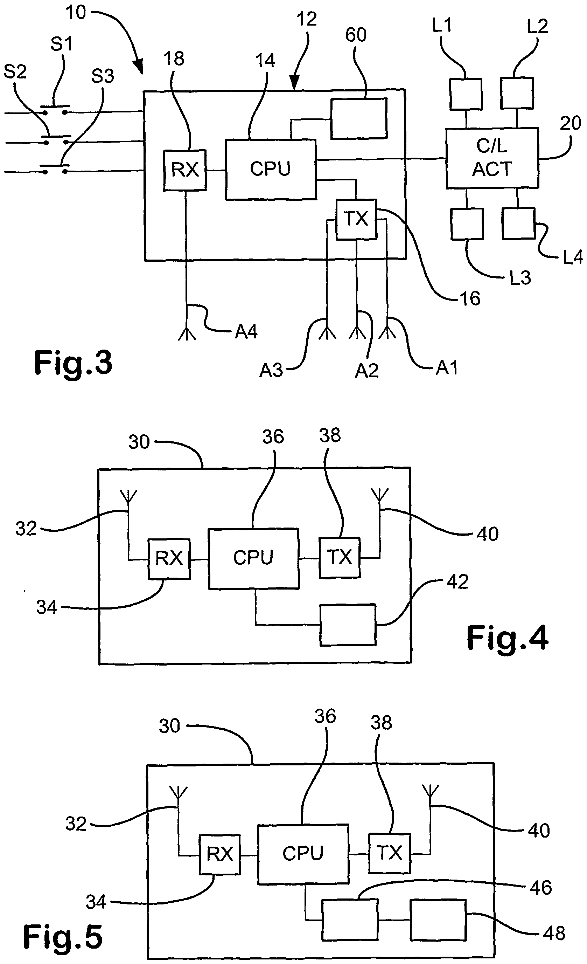

Figures 3 and 4 together illustrate a first form of passive entry system according to the invention which aims to address this drawback. The system of the invention comprises all of the features of the prior art system described with reference to Figure 1. However, in the system of Figures 3 and 4, the VTU 12 is additionally provided with a timer 60 connected to the CPU 14.

Similarly, the token 30 includes all of the features of the token described with reference to Figure 2 but additionally includes means 42, such as a transducer, connected to the CPU 36, for generating a tactile, visual or audible signal to the user, as described below.

In use, when the CPU 14 sends a LOCK signal to the door lock actuator 20, the timer 60 begins to count down a predetermined time period. The time period may be selected as desired but in the preferred embodiment is at least five minutes. During this period, the CPU 14 periodically or continuously generates an interrogation signal, similar in form to the command signal, and transmits it via the transmitter 16 and antennas A1 - A3 as described above.

If the token 30 is still within the threshold range of the antennas A1 - A3, the interrogation signal is received by the token's receiver unit 34 and encoded with the encryption algorithm by the CPU 36. The transmitter unit 38 then transmits the encrypted interrogation signal back to the VTU whereby it is received by the receiver unit 18. The purpose of this periodic or continuous scanning function is to determine whether the token has remained within the threshold range of the VTU 12 after the vehicle is locked.

If the receiver unit 18 in the VTU 12 is still receiving a reply signal from the token in response to the scanning function after the countdown time on the timer 60 reaches zero, then the CPU 14 generates an alert signal which is applied to the transmitter unit 16, modulated and then transmitted to the token 30 via the antennas A1 - A3. The receiver unit 34 in the token receives the alert signal from the VTU 12 and applies it to the CPU 36. The CPU 36 then controls the transducer 42 to generate a tactile, visual or audible signal (depending on the nature of the transducer provided) to the user. For example, the transducer may comprise a buzzer or siren to generate an audible signal to the user, or may comprise an LED or other device for emitting a visible alert signal.

The purpose of the signal is to advise the user that the token is still within range of the vehicle and the security risk that this presents. The user is then free to relocate the token in a position in which it is outside the threshold range of the vehicle.

In a second embodiment of the invention (not shown), alternatively or in addition to the transducer in the token, the system is provided with a means for selectively disconnecting or deactivating one or more of the antennas A1 - A3 in response to the reply signal from the token still being received by the receiver unit 18 when the time period on the timer 60 expires. This means may be provided by a function in the CPU 14 or the transmitter 16 which selects which of the antennas A1 - A3 the alert signal is transmitted via. Alternatively, means (not shown) may be provided for mechanically or electronically disconnecting the relevant antenna or antennas A1 - A3 from the transmitter 16. Such means may comprise mechanical switches or contacts, or electronic switches or circuits such as transistors, in a manner which will be well understood by the skilled person.

Advantageously, during the scanning function, the CPU 14 is able to determine which of the antennas A1 - A3 is within range of the token and thereby to disconnect or deactivate that antenna. This is achieved by "cycling" the antennas, i.e. transmitting the interrogation signal via each antenna A 1 - A3 individually in sequence and waiting for the reply signal from the token. When the reply signal is received, the CPU 14 identifies which antenna the interrogation signal was transmitted via and then disconnects or deactivates that antenna as desired.

In a third embodiment of the invention (not shown) the system is arranged to deactivate the passive entry function after the countdown time on the timer 60 reaches zero. This can be achieved in a number of ways. For example, when the timer reaches zero and the token 30 is determined to be still in range of the vehicle as described above, the CPU initiates a routine whereby the UNLOCK signal is no longer generated when any of the door switches S1 - S3 is operated. Since the UNLOCK signal is no longer applied to the lock actuator control unit 20, the vehicle doors will not be unlocked even if the token 30 is in range of the vehicle.

In a fourth embodiment of the invention (not shown), the door switches may be deactivated, for example by the CPU 14 no longer generating the command signal when any of the door switches S1 - S3 are operated, or through the switches being mechanically or electronically disconnected from the VTU 12. Thus, when a door switch is pressed, either the CPU 14 ignores this action and does not generate the command signal or the action is not communicated to the CPU owing to the disconnected status of the switches. The manner in which this functionality can be achieved will be well understood by those skilled in the art.

In a fifth embodiment of the invention (not shown), the VTU 12 is arranged to generate and transmit a disable signal to the token 30 which causes the token to be disabled or deactivated. In this embodiment, when the timer 60 reaches zero, the processor generates a disable signal which is applied to the transmitter and transmitted via one or more of the antennas A1 - A3. The token 30 receives the disable signal and the CPU 36 then executes a routine whereby either it no longer responds on receiving a command signal from the VTU 12 or it responds to the command signal with an error signal such that the processor in the VTU does not generate the UNLOCK signal on receipt thereof.

The error signal may be generated through the CPU 36 changing the command signal on receipt thereof, for example by changing the value of one of the bits in the identifier portion of the signal such that the token value generated following application of the algorithm is not identical to the reference value calculated by the CPU 14 in the VTU 12.

In any of the above described embodiments, the system can be reset by the user such that full passive entry functionality is restored. The reset function can be achieved, for example, by the user entering a predetermined sequence on two or more buttons disposed on the token or by pressing a dedicated button thereon. This predetermined sequence causes the CPU 14 to generate a reset signal which is transmitted to the VTU 12 by the transmitter 38 and second antenna arrangement 40. The reset signal is received by the receiver unit 18 in the VTU 12 and applied to the CPU 14 which resets the system such that normal passive entry operation is restored.

It will be understood by the skilled person that the second to the fifth embodiments of the invention may employ all of the features or elements of the first embodiment of the invention. Specifically, the provision of a timer is common to each of these embodiments in order to determine for how long the token has been within the threshold range of the vehicle after the vehicle has been locked, as is means (which may be provided by a functionality or routine of the CPU itself as opposed to a separate and distinct element in either the VTU or the token) to control the operation of the system if the token has so been in range for a predetermined length of time.

A further problem with conventional keyless entry systems has been identified by the applicant company. Specifically, even if the token 30 is located at a distance from the vehicle which is significantly greater than the predetermined threshold range of the transmitted command signal, it is theoretically possible for a thief or unauthorised person to extend the effective threshold range of the command signal to an extent which places the token within such a range.

This extension of the threshold range might be achieved by the thief gaining access to the vehicle wiring harness and, for example, either connecting an extension wire to the antennas A1 - A3 or electronically boosting the strength of the command signal transmitted by the VTU. In the former situation, should the thief be able to locate part of the extension wire within 2m (the threshold range of the command signal) of the token 30, then the token will receive the command signal and respond in the normal way.

In the latter situation, the boosted command signal will have a greater range than the threshold range and this may be sufficient to reach the token. Both modifications will therefore have the effect of increasing the threshold range of the command signal so that, even if the 30 token is significantly distanced from the vehicle, the vehicle doors can still be opened. It should be noted that this is possible because the UHF signal transmitted by the token has a range of over thirty metres.

To address this further problem, a sixth embodiment of the present invention, shown in Figure 5, provides a means whereby the token does not operate correctly if it has remained static for a predetermined period of time immediately prior to receipt of the command signal from the VTU 12. In this case, the token 30 additionally comprises a timer unit 46 connected to the CPU 36 and a motion sensor 48 connected to the timer unit 46.

In use, any movement of the token 30, such as by virtue of the user picking up or carrying the token, is detected by the motion sensor 48 which sends a movement signal to the timer unit 46. The timer unit 46 measures the time between successive movement signals from the motion sensor 48. When a command signal from the VTU 12 is received by the receiver unit 34 and applied to the CPU 36, before responding by applying the algorithm and retransmitting the command signal to the VTU, the CPU 36 generates and sends a request signal to the timer unit 46 requesting the time interval since the last movement signal was received by the timer unit 46 from the motion sensor 48.

If the time interval since the last movement signal was received by the timer unit 46 exceeds a predetermined duration, suggesting that it is not on the owners' person and that the command signal from the VTU 12 may have been generated as a result of an attempt by a third party to gain unauthorised access to the vehicle, then the CPU 36 executes a routine whereby either it does not respond to the command signal, as in the case of embodiment 3 or alternatively sends an error signal to the VTU such that the processor does not generate the lock/unlock signal, as in the case of embodiment 4 above. The error signal may additionally or alternatively be used to trigger the vehicle alarm system, where one is fitted.

Only if the time interval since the last movement signal was received by the timer unit 46 is within the predetermined duration does the token respond correctly to a command signal from the VTU 12 such that the vehicle doors are unlocked.

This particularly advantageous embodiment hinders or substantially prevents any attempt to access the vehicle by extending the effective range of the transmitted command signal from the VTU, either by boosting the power of the electromagnetic signal or by accessing the vehicle wiring harness and extending the length of the antennas. The token will only respond correctly to the command signal if it has been moved within a predetermined interval prior to receipt of the command signal, as it would normally have been if legitimately used by the user.

In Figures 1 - 5, features of the prior art and the embodiments of the invention such as receiver units, transmitter units and timer units are illustrated as separate and distinct elements. It will be appreciated, however, that the functions of these elements may be incorporated into the CPUs of the VTU 10 and token 30, respectively, and that the CPUs themselves may comprise ASICs or other suitable IC chips.

It will be appreciated that the present invention provides a number of separate or combined solutions to a new problem which has been identified by the present applicants in respect of passive or keyless entry systems. It will further be appreciated that the embodiments described above may be implemented individually or in combination and in a number of different ways.

For example, the invention is equally applicable to the vehicle's ignition system and/or immobiliser system as would be well understood by the skilled person.

## Claims

1. A passive entry system (10) for a vehicle comprising first transceiver means (12) associated with the vehicle and second transceiver means (30) associated with a user of the vehicle, at least one of the first and second transceiver means (12,30) being arranged selectively to communicate with the other when the second transceiver means (30) is located within a predetermined range of the vehicle;
the first and second transceiver means comprises a transmitter (16,38) and a receiver (18,34) for transmitting and receiving signals, respectively, via one or more antennas (A1-A4:32,40), and processor means (14,36) for controlling the transceiver means;
the system comprises first means for determining whether the second transceiver means (30) is located within a predetermined range of the vehicle a predetermined period after locking of the vehicle doors, the first means including a timer (60) associated with the first transceiver means (12) for timing said predetermined period; and second means for controlling the passive entry system in response thereto, the second means including the processor means (14) of the first transceiver means (12);
**characterised in that** if the first means determines that the second transceiver means (30) is located within said predetermined range of the vehicle at the end of the predetermined period, said processor means (14) controls said system (10) to do at least one of the following:
generate an alert signal, said alert signal being transmitted to said second transceiver means (30) by said transmitter (16) via said one or more antennas (A1-A3); activate an alarm system on said vehicle; disable, deactivate or disconnect one or more of said antennas (A1-A4); disable or deactivate said system; and to generate a disable signal, said disable signal being transmitted to said second transceiver means (30) via said one or more antennas (A1-A3).

2. A passive entry system (10) for a vehicle comprising first transceiver means (12) associated with the vehicle and second transceiver means (30) associated with a user of the vehicle, at least one of the first and second transceiver means (12,30) being arranged selectively to communicate with the other when the second transceiver means (30) is located within a predetermined range of the vehicle;
the first and second transceiver means (12,30) comprising a transmitter (16,38) and a receiver (18,34) for transmitting and receiving signals, respectively, via one or more antennas (A1-A4;32,34), and processor means for controlling the transceiver means, including a first central processing unit, hereinafter called first CPU (14) for controlling the first transceiver means (12) and a second central processing unit, hereinafter called second CPU (36) for controlling the second transceiver means (30);
the system comprising first means for determining whether the second transceiver means (30) has been moved during a predetermined period before communication between the first and second transceiver means (12,30), the first means including a motion sensor (48) to detect movement of the second transceiver means (30), the second CPU (36), and a timer unit (46) for measuring successive movement signals from the motion sensor (48); and second means for controlling the passive entry system in response thereto, the second means including the first CPU (14);
**characterised in that**, in response to receipt of a command signal from the first transceiver means (12), the second CPU (36) requests from the timing unit (46) the time interval since the last movement signal was received from the motion sensor (48), and if this exceeds the predetermined period, the second CPU (36) sends an error signal to the first transceiver means (12) such that the first CPU (14) does not generate the lock/unlock signal.

3. A system as claimed in claim 1, wherein in response to said alert signal being received, said second transceiver means (30) is arranged to deliver a tactile, audible or visual signal to said user.

4. A system as claimed in claim 1 or 3, wherein said processor means (14) is operable to disconnect one or more of the switch means from the first transceiver means.

5. A system as claimed in claim 1, 3 or 4, wherein in response to said disable signal being received, said second transceiver means (30) is disabled.

6. A system as claimed in claim 1 or 5, wherein the processor means (14) is arranged to activate an alarm system of the vehicle.

7. A system as claimed in claim 2, wherein the second CPU (36) is arranged to activate an alarm system of the vehicle in response to receipt of the error signal.

## Patentansprüche

1. Passives Zugangssystem (10) für ein Fahrzeug, das ein erstes Sende-Empfangs-Mittel (12), das dem Fahrzeug zugehörig ist, und ein zweites Sende-Empfangs-Mittel (30), das einem Benutzer des Fahrzeugs zugehörig ist, umfasst, wobei das erste und/oder zweite Sende-Empfangs-Mittel (12, 30) gezielt angeordnet ist bzw. sind, um mit dem anderen zu kommunizieren, wenn sich das zweite Sende-Empfangs-Mittel (30) innerhalb einer bestimmten Reichweite des Fahrzeugs befindet;
wobei das erste und zweite Sende-Empfangs-Mittel einen Sender (16, 38) und einen Empfänger (18, 34) zum Senden beziehungsweise Empfangen von Signalen über eine oder mehrere Antennen (A1-A4; 32, 40) umfassen, und Prozessormittel (14, 36) zum Steuern der Sende-Empfangs-Mittel;
wobei das System ein erstes Mittel umfasst, um festzustellen, ob sich das zweite Sende-Empfangs-Mittel (30) eine bestimmte Zeit nach dem Verschließen der Fahrzeugtüren innerhalb einer bestimmten Reichweite des Fahrzeugs befindet, wobei das erste Mittel einen Zeitmesser (60) aufweist, der dem ersten Sende-Empfangs-Mittel (12) zugehörig ist, um die bestimmte Zeit zu messen, und ein zweites Mittel zum Steuern des passiven Zugangssystems als Reaktion darauf, wobei das zweite Mittel das Prozessormittel (14) des ersten Sende-Empfangs-Mittels (12) aufweist,
**dadurch gekennzeichnet, dass** wenn das erste Mittel feststellt, dass sich das zweite Sende-Empfangs-Mittel (30) am Ende der bestimmten Zeit innerhalb der bestimmten Reichweite des Fahrzeugs befindet, das Prozessormittel (14) das System (10) steuert, damit es mindestens eins aus Folgendem tut:
Erzeugen eines Alarmsignals, wobei das Alarmsignal von dem Sender (16) über die eine oder mehreren Antennen (A1-A3) an das zweite Sende-Empfangs-Mittel (30) gesendet wird; Aktivieren eines Alarmsystems in dem Fahrzeug; Abschalten, Deaktivieren oder Trennen einer oder mehrerer der Antennen (A1-A4); Abschalten oder Deaktivieren des Systems und Erzeugen eines Abschaltsignals, wobei das Abschaltsignal über die eine oder mehreren Antennen (A1-A3) an das zweite Sende-Empfangs-Mittel (30) gesendet wird.

2. Passives Zugangssystem (10) für ein Fahrzeug, das ein erstes Sende-Empfangs-Mittel (12), das dem Fahrzeug zugehörig ist, und ein zweites Sende-Empfangs-Mittel (30), das einem Benutzer des Fahrzeugs zugehörig ist, umfasst, wobei das erste und/oder zweite Sende-Empfangs-Mittel (12, 30) gezielt angeordnet ist bzw. sind, um mit dem anderen zu kommunizieren, wenn sich das zweite Sende-Empfangs-Mittel (30) innerhalb einer bestimmten Reichweite des Fahrzeugs befindet;
wobei das erste und zweite Sende-Empfangs-Mittel (12, 30) einen Sender (16, 38) und einen Empfänger (18, 34) zum Senden beziehungsweise Empfangen von Signalen über eine oder mehrere Antennen (A1-A4; 32, 34) umfassen, und Prozessormittel zum Steuern der Sende-Empfangs-Mittel, einschließlich einer ersten zentralen Verarbeitungseinheit, nachstehend als erste CPU (14) bezeichnet, zum Steuern des ersten Sende-Empfangs-Mittels (12), und einer zweiten zentralen Verarbeitungseinheit, nachstehend als zweite CPU (36) bezeichnet, zum Steuern des zweiten Sende-Empfangs-Mittels (30);
wobei das System ein erstes Mittel umfasst, um festzustellen, ob das zweite Sende-Empfangs-Mittel (30) während eines bestimmten Zeitabschnitts vor der Kommunikation zwischen dem ersten und zweiten Sende-Empfangs-Mittel (12, 30) bewegt wurde, wobei das erste Mittel einen Bewegungssensor (48) zum Erfassen der Bewegung des zweiten Sende-Empfangs-Mittels (30), die zweite CPU (36) und eine Zeitmesseinheit (46) zum Messen aufeinanderfolgender Bewegungssignale von dem Bewegungssensor (48) enthält; und ein zweites Mittel zum Steuern des passiven Zugangssystems als Reaktion darauf, wobei das zweite Mittel die erste CPU (14) enthält;
**dadurch gekennzeichnet, dass** als Reaktion auf den Empfang eines Befehlssignals vom ersten Sende-Empfangs-Mittel (12) die zweite CPU (36) von der Zeitmesseinheit (46) den Zeitraum abfragt, seit das letzte Bewegungssignal vom Bewegungssensor (48) erhalten wurde, und wenn dieser den bestimmten Zeitabschnitt überschreitet, die zweite CPU (36) ein Fehlersignal an das erste Sende-Empfangs-Mittel (12) sendet, sodass die erste CPU (14) das Abschließ-/Entriegelungs-Signal nicht erzeugt.

3. System nach Anspruch 1, wobei als Reaktion auf den Empfang des Alarmsignals das zweite Sende-Empfangs-Mittel (30) angeordnet ist, dem Benutzer ein fühlbares, hörbares oder sichtbares Signal auszugeben.

4. System nach Anspruch 1 oder 3, wobei das Prozessormittel (14) funktionsfähig ist, eins oder mehrere der Schaltmittel von dem ersten Sende-Empfangs-Mittel zu trennen.

5. System nach Anspruch 1, 3 oder 4, wobei als Reaktion auf den Empfang des Abschaltsignals das zweite Sende-Empfangs-Mittel (30) abgeschaltet wird.

6. System nach Anspruch 1 oder 5, wobei das Prozessormittel (14) angeordnet ist, ein Alarmsystem des Fahrzeugs zu aktivieren.

7. System nach Anspruch 2, wobei die zweite CPU (36) angeordnet ist, ein Alarmsystem des Fahrzeugs als Reaktion auf den Empfang des Fehlersignals zu aktivieren.

## Revendications

1. Système d'ouverture passif (10) pour véhicule comprenant un premier moyen d'émetteur-récepteur (12) associé au véhicule et un second moyen d'émetteur-récepteur (30) associé à un utilisateur du véhicule, au moins l'un des premier et second moyens d'émetteur-récepteur (12, 30) étant agencé sélectivement pour communiquer avec l'autre quand le second moyen d'émetteur-récepteur (30) se trouve à une portée prédéterminée du véhicule ;
les premier et second moyens d'émetteur-récepteur comprennent un émetteur (16, 38) et un récepteur (18, 34) pour émettre et recevoir des signaux, respectivement, par l'intermédiaire d'une ou de plusieurs antennes (A1-A4 : 32, 40), et de moyens de processeur (14, 36) pour commander les moyens d'émetteur-récepteur ;
le système comprend un premier moyen pour déterminer si le second moyen d'émetteur-récepteur (30) se trouve ou non à une portée prédéterminée du véhicule une période prédéterminée après le verrouillage des portes du véhicule, le premier moyen comportant une temporisation (60) associée au premier moyen d'émetteur-récepteur (12) pour minuter ladite période prédéterminée ; et un second moyen de commande du système d'ouverture passif en réponse à cette temporisation, le second moyen comportant le moyen de processeur (14) du premier moyen d'émetteur-récepteur (12) ;
**caractérisé en ce que** si le premier moyen détermine que le second moyen d'émetteur-récepteur (30) est situé en deçà de ladite portée prédéterminée du véhicule à la fin de la période prédéterminée, ledit moyen de processeur (14) commande audit système (10) de procéder à au moins l'une des opérations suivantes :
génération d'un signal d'alerte, ledit signal d'alerte étant émis vers ledit second moyen d'émetteur-récepteur (30) par ledit émetteur (16) par l'intermédiaire desdites une ou plusieurs antennes (A1-A3) ; activation d'un système d'alarme sur ledit véhicule ; désexcitation, désactivation ou déconnexion d'une ou de plusieurs desdites antennes (A1-A4) ; désexcitation ou désactivation dudit système ; et génération d'un signal de désexcitation, ledit signal de désexcitation étant émis vers ledit second moyen d'émetteur-récepteur (30) par l'intermédiaire d'une ou de plusieurs antennes (A1-A3).

2. Système d'ouverture passif (10) pour véhicule comprenant un premier moyen d'émetteur-récepteur (12) associé au véhicule et un second moyen d'émetteur-récepteur (30) associé à un utilisateur du véhicule, au moins l'un des premier et second moyens d'émetteur-récepteur (12, 30) étant agencé sélectivement pour communiquer avec l'autre quand le second moyen d'émetteur-récepteur (30) se trouve à une portée prédéterminée du véhicule ;
les premier et second moyens d'émetteur-récepteur (12, 30) comprenant un émetteur (16, 38) et un récepteur (18, 34) pour émettre et recevoir des signaux, respectivement, par l'intermédiaire d'une ou de plusieurs antennes (A1-A4 ; 32, 34), et des moyens de processeur pour commander les moyens d'émetteur-récepteur, comportant une première unité centrale de traitement, appelée ci-après UC (14) pour commander le premier moyen d'émetteur-récepteur (12) et une seconde unité centrale de traitement, appelée ci-après UC (36) pour commander le second moyen d'émetteur-récepteur (30) ;
le système comprenant un premier moyen pour déterminer si le second moyen d'émetteur-récepteur (30) a été déplacé ou non durant une période prédéterminée avant la communication entre les premier et second moyens d'émetteur-récepteur (12, 30), le premier moyen comportant un capteur de mouvement (48) pour détecter un mouvement du second moyen d'émetteur-récepteur (30), la seconde UC (36), et une unité de temporisation (46) pour mesurer des signaux de mouvement successifs provenant du capteur de mouvement (48) ; et un second moyen pour commander le système d'ouverture passif en réponse à cette temporisation, le second moyen comportant la première UC (14) ;
**caractérisé en ce que**, en réponse à la réception d'un signal de commande depuis le premier moyen d'émetteur-récepteur (12), la seconde UC (36) demande à l'unité de temporisation (46) l'intervalle de temps depuis la réception du dernier signal de mouvement depuis le capteur de mouvement (48), et si celui-ci dépasse la période prédéterminée, la seconde UC (36) envoie un signal d'erreur au premier moyen d'émetteur-récepteur (12) de telle sorte que la première UC (14) ne génère pas le signal de verrouillage/déverrouillage.

3. Système selon la revendication 1, dans lequel en réponse à la réception dudit signal d'alerte, ledit second moyen d'émetteur-récepteur (30) est agencé pour délivrer un signal tactile, audible ou visuel audit utilisateur.

4. Système selon la revendication 1 ou 3, dans lequel ledit moyen de processeur (14) est actionnable pour déconnecter un ou plusieurs des moyens de commutation depuis le premier moyen d'émetteur-récepteur.

5. Système selon la revendication 1, 3 ou 4, dans lequel en réponse à la réception dudit signal de désexcitation, ledit second moyen d'émetteur-récepteur (30) est désexcité.

6. Système selon la revendication 1 ou 5, dans lequel ledit moyen de processeur (14) est agencé pour activer un système d'alarme du véhicule.

7. Système selon la revendication 2, dans lequel la seconde UC (36) est agencée pour activer un système d'alarme du véhicule en réponse à la réception du signal d'erreur.
